# EUROPÄISCHE PATENTSCHRIFT

(11) **EP 4 322 425 B1**
(45) Veröffentlichungstag und Bekanntmachung des Hinweises auf die Patenterteilung: **27.11.2024**
(21) Anmeldenummer: 23186293.9
(22) Anmeldetag: 19.07.2023
(51) Int. Cl.: H04B 10/00

(54) **SELBSTKOMPENSIERENDER POLARISATIONSMODULATOR**
SELF-COMPENSATING POLARIZATION MODULATOR
MODULATEUR DE POLARISATION A AUTOCOMPENSATION

(30) Priorität: 29.07.2022 DE 102022119077
(43) Veröffentlichungstag der Anmeldung: 14.02.2024
(73) Patentinhaber: Tesat Spacecom GmbH & Co. KG, 71522 Backnang (DE)
(72) Erfinder: STRUCK, Julian, 71522 Backnang (DE)
(74) Vertreter: LKGLOBAL Lorenz & Kopf Patentanwalt Attorney at Law PartG mbB

(56) Entgegenhaltungen:
- US-B1- 6 333 808
- US-B1- 6 459 518

## Beschreibung

### Technisches Gebiet

Die vorliegende Beschreibung betrifft optische Signalerzeugung und Signalübertragung, insbesondere die Übertragung von Informationen mittels Polarisationsmodulation. Im Speziellen betrifft die Beschreibung eine Modulatoreinheit zum Modulieren der Polarisation eines optischen Signals, eine optische Signalübertragungsstrecke mit einer solchen Modulatoreinheit, und ein System mit einer solchen Modulatoreinheit, beispielsweise in Form eines Satelliten.

### Technischer Hintergrund

Informationen können mit technischen Mitteln übertragen werden, indem eine Informationseinheit einem bestimmten Zustand eines Trägersignals zugewiesen wird. Das Trägersignal ist üblicherweise eine elektromagnetische Welle aus einem spezifischen spektralen Bereich. Um nun eine Information auf das Trägersignal aufzuprägen, wird eine Eigenschaft des Trägersignals geändert. Die Änderung an sich oder der Zustand des Trägersignals nach der Änderung entsprechen dabei der zu übertragenden Information. Üblicherweise wird das Trägersignal in zeitlichen Abständen geändert, um hierdurch mehrere Informationseinheiten zu übertragen.

Als Informationsträger kommen je nach Trägersignal verschiedene physikalische Merkmale des Trägersignals in Frage, beispielsweise: die Amplitude, die Frequenz, die Phase und/oder die Polarisation. Wird eines dieser Merkmale über der Zeit verändert, so wird dieser Vorgang als Modulation bezeichnet.

Auf dem Signalverarbeitungspfad kommen verschiedene technische Komponenten zum Einsatz, um das Trägersignal zu bearbeiten und die gewünschte Information in das Trägersignal einzubringen, bevor das Trägersignal über die Übertragungsstrecke (leitungsgebunden oder leitungslos) übertragen wird.

Die bei der Vorbereitung und Bearbeitung des Trägersignals verwendeten Komponenten dienen dazu, das Trägersignal entsprechend zu modulieren, damit die zu übertragende Information richtig auf das Trägersignal aufgebracht wird und mit möglichst wenig Störungen und Verlusten über die Übertragungsstrecke übertragen wird.

Nun kann es aber vorkommen, dass neben der gewollten Modulation (Veränderung des Trägersignals) auch ungewollte Veränderungen des Trägersignals erfolgen, beispielsweise durch parasitäre Effekte oder andere ungewollte Eigenschaften der in die Vorbereitung des Trägersignals involvierten Komponenten. In dem Fall ist es bei einem Empfänger des Trägersignals nicht immer erkennbar, welche Veränderung des Trägersignals auf der gewollten Modulation basiert und welche Veränderung von ungewollten Effekten hervorgerufen wurde. Dadurch kann die Güte des Signals negativ beeinflusst werden.

### Beschreibung

Ausgehend davon kann es als Aufgabe betrachtet werden, den Einfluss von ungewollten Effekten einer Modulatoreinheit auf ein zur Übertragung moduliertes Trägersignal zu reduzieren oder zu eliminieren. Es kann insbesondere als Aufgabe betrachtet werden, Polarisationsfehler bei einem polarisationsmodulierten optischen Signal zu vermeiden.

Diese Aufgabe wird gelöst durch den Gegenstand des unabhängigen Anspruchs. Weitere Ausführungsformen ergeben sich aus den abhängigen Ansprüchen sowie aus der folgenden Beschreibung.

Gemäß einem Aspekt ist eine Modulatoreinheit zum Modulieren der Polarisation eines optischen Signals angegeben. Die Modulatoreinheit weist eine Lichtquelle, einen polarisationsabhängigen Phasenmodulator, und einen Reflektor auf. Die Lichtquelle ist ausgestaltet, ein optisches Signal auszugeben und als Eingangssignal in Richtung des polarisationsabhängigen Phasenmodulators zu emittieren, wobei das optische Signal eine erste Polarisationskomponente mit einer ersten Polarisationsrichtung und eine zweite Polarisationskomponente mit einer zweiten Polarisationsrichtung enthält. Der polarisationsabhängige Phasenmodulator ist ausgestaltet, eine erste Phase der ersten Polarisationskomponente des Eingangssignals in der ersten Polarisationsrichtung zu modulieren und das so modulierte Eingangssignal an den Reflektor weiterzuleiten. Der Reflektor ist ausgestaltet, das erhaltene optische Signal in Richtung des polarisationsabhängigen Phasenmodulators zu retroreflektieren und dabei die Polarisation des optischen Signals zu verändern (beispielsweise um 90°), so dass die erste Polarisationskomponente mit der ersten Polarisationsrichtung die zweite Polarisationsrichtung erhält und die zweite Polarisationskomponente mit der zweiten Polarisationsrichtung die erste Polarisationsrichtung erhält. Der polarisationsabhängige Phasenmodulator ist ausgestaltet, eine zweite Phase der zweiten Polarisationskomponente des retroreflektierten optischen Signals in der ersten Polarisationsrichtung zu modulieren. Die Modulatoreinheit ist ausgestaltet, das so modulierte optische Signal als polarisationsmoduliertes Ausgangssignal auszugeben.

Das optische Signal stellt eine Überlagerung aus zwei orthogonalen Polarisationskomponenten dar. Der polarisationsabhängige Phasenmodulator ist ausgestaltet, unterschiedliche Phasen auf beide Polarisationskomponenten aufzubringen.

Grundsätzlich kann die Lichtquelle ein Lichtemitter sein (beispielsweise ein Laser) oder der Ausgang eines lichtführenden Elements. In einem Ausführungsbeispiel durchläuft das optische Signal denselben optischen Pfad der Modulatoreinheit zweimal in entgegengesetzte Richtungen. Auf dem Hinweg läuft das optische Signal von der Lichtquelle durch den polarisationsabhängigen Phasenmodulator zu dem Reflektor. Der Reflektor retroreflektiert das optische Signal und dreht die Phase des optischen Signals dabei um 90° (entweder +90° oder -90°). Beispielsweise ist der Reflektor als Faraday-Spiegel implementiert, der ein auf dem Faraday-Effekt beruhender Retroreflektor ist, der einen Kristall enthält, an welchem ein Magnetfeld anliegt und der die Polarisation in Abhängigkeit von der Ausbreitungsrichtung des Magnetfeldes dreht. Wenn beispielsweise horizontal polarisiertes Licht auf den Reflektor trifft, wird dies als vertikal polarisiertes Licht retroreflektiert. Es handelt sich also bei dem Reflektor um die Kombination aus einem Faraday-Rotator und einem Spiegel. Der Faraday-Rotator wird zunächst von dem optischen Signal passiert und die Polarisation des Lichts wird dabei um 45° (+45° oder -45°) gedreht. Dann wird das optische Signal gespiegelt und passiert erneut den Faraday-Rotator, wobei seine Polarisation um weitere 45° (in dieselbe Richtung wie im ersten Schritt) gedreht wird. In Summe unterscheidet sich dann die Polarisation des retroreflektierten Lichts von der Polarisation des einfallenden Lichts um 90°.

Gerade weil das optische Signal denselben optischen Pfad mit getauschten Polarisationsrichtungen zweimal durchläuft, werden parasitäre Einflüsse der Modulatoreinheit auf die Phase des optischen Signals und Fehlerphasen eliminiert, insbesondere Phasenfehler, welche durch langsame thermische und mechanische Fluktuationen der Modulatoreinheit, insbesondere auf der Strecke ab einschließlich dem polarisationsabhängigen Phasenmodulator bis zu einschließlich dem Reflektor, aber auch vor dem polarisationsabhängigen Phasenmodulator, auftreten.

Auf dem Hinweg wird beispielsweise die Komponente des optischen Signals mit horizontaler Polarisation (für das Beispiel als erste Polarisationsrichtung angenommen) moduliert (es wird eine erste Phase auf diese Komponente moduliert) und die Komponente mit vertikaler Polarisation (für das Beispiel als zweite Polarisationsrichtung angenommen) passiert den polarisationsabhängigen Phasenmodulator, ohne dass Veränderungen an der Phase dieser Komponente vorgenommen werden. Nun wird das optische Signal von dem Reflektor retroreflektiert und die Polarisation um 90° gedreht, die Komponente mit horizontaler Polarisation ist nun vertikal polarisiert, die Komponente mit vertikaler Polarisation ist nun horizontal polarisiert. Auf dem Rückweg durchläuft das optische Signal erneut den polarisationsabhängigen Phasenmodulator, und nun wird die (jetzt) horizontal polarisierte Komponente (welche der vertikal polarisierten Komponente des Hinwegs entspricht) in seiner Phase moduliert und die (jetzt) vertikal polarisierte Komponente passiert den polarisationsabhängigen Phasenmodulator ohne weitere Änderung seiner Phase. Dies bedeutet, dass der polarisationsabhängige Phasenmodulator nur eine einzelne Modulationsachse hat, welche auf dem Hin- und Rückweg gleichbleibt, also auf dieselbe Polarisationsrichtung wirkt.

Wird auf dem Hinweg eine Fehlerphase (oder Fehlphasenverschiebung) in das optische Signal eingebracht, indem beispielsweise die Phase der horizontal polarisierten Komponente auf andere Weise als die Phase der vertikal polarisierten Komponente parasitär beeinflusst wird, so hebt sich diese Fehlerphase auf dem Rückweg auf, weil das optische Signal mit einer um 90° gedrehten Polarisation denselben optischen Pfad durchläuft und die gleiche Fehlerphase nun auf die jeweils andere Polarisationsachse aufgetragen wird. Hierdurch werden alle relativen Phasenfehler auf gleiche Weise in beide Polarisationsachsen eingebracht.

Die Phase, welche auf die horizontal polarisierte Komponente des Rückwegs aufgebracht wird, wird als zweite Phase bezeichnet, weil auf dem Rückweg die erste Phase in der vertikal polarisierten Komponente des optischen Signals enthalten ist und die erste Phase gegenüber der zweiten Phase unterschiedlich sein kann.

In dem hier wiedergegeben Beispiel wird in einer bestimmten Weise auf horizontal und vertikal polarisierte Komponenten des optischen Signals Bezug genommen, nämlich dass auf dem Hin- und Rückweg durch den polarisationsabhängigen Phasenmodulator jeweils die horizontal polarisierte Komponente phasenmoduliert wird. Es versteht sich allerdings, dass dieses Beispiel nicht einschränkend ist und der polarisationsabhängigen Phasenmodulator statt der horizontal polarisierten Komponente die vertikal polarisierte Komponente oder eine beliebige andere Komponente des optischen Signals phasenmodulieren kann. Entscheidend ist, dass zwischen den beiden Vorgängen, bei denen die Phase einer Polarisationskomponente des optischen Signals moduliert wird, die Polarisation des optischen Signals um 90° gedreht wird.

Im Ergebnis werden bei diesem Aufbau sowohl die vertikal polarisierte Komponente als auch die horizontal polarisierte Komponente des optischen Signals in einer Modulatoreinheit mit einem einzelnen optischen Pfad moduliert. Das resultierende optische Signal hat in Summe eine gewünschte Polarisationsmodulation erhalten, indem auf dem Hinweg die erste Polarisationskomponente mit einer ersten Polarisationsrichtung und auf dem Rückweg die zweite Polarisationskomponente, welche auf dem Rückweg die erste Polarisationsrichtung hat, in ihrer Phase moduliert werden, wobei jedoch die Polarisation des optischen Signals auf dem Rückweg im Vergleich zum Hinweg um 90° verändert ist.

Der hier verwendete polarisationsabhängige Phasenmodulator ist ein phasenverändernder Modulator, welcher auf eine Polarisationskomponente eines optischen Signals wirkt, d.h. dass der polarisationsabhängige Phasenmodulator die Phase zweier orthogonal zueinander stehender Polarisationskomponenten des optischen Lichts verändert. Beispielsweise ist der polarisationsabhängige Phasenmodulator ein elektro-optischer Modulator, EOM. Es ist zu verstehen, dass jegliche Bezugnahme auf einen EOM in dieser Beschreibung lediglich beispielhaft erfolgt und grundsätzlich für einen polarisationsabhängigen Phasenmodulator gilt.

Beispielsweise hat der polarisationsabhängige Phasenmodulator zwei orthogonal zueinander ausgerichtete optische Achsen. Mittels elektrischer Energie, beispielsweise einer angelegten Spannung entlang einer dieser optischen Achsen, wird deren Brechungsindex modifiziert und es resultiert eine Phasenveränderung der Polarisationskomponente des optischen Signals gegenüber der anderen bzw. orthogonalen optischen Achse.

Durch die Verwendung eines Faraday-Spiegels ist der Aufbau der Modulatoreinheit sehr platzsparend und kompakt. Ein polarisationsabhängiger Phasenmodulator kann sehr schnell geschaltet werden, so dass die hier beschriebene Modulatoreinheit bis in hohe Frequenzbereiche verwendet werden kann, beispielsweise mehrere 10 GHz, wie z.B. bis hin zu 30 bis 40 GHz oder auch höheren Frequenzbereichen.

Mit der hier beschriebenen Modulatoreinheit lassen sich verschiedene Polarisationszustände eines optischen Signals einstellen. Hierbei können beispielsweise verschiedene diskrete Zustände der Polarisation eingestellt werden, indem die Phase des horizontal polarisierten Anteils des optischen Signals mit Bezug zu der Phase des vertikal polarisierten Anteils des optischen Signals verändert wird. Die Polarisation des optischen Signals kann aber grundsätzlich beliebig kontinuierlich verändert werden, ohne auf eine beschränkte Anzahl von Polarisationszuständen begrenzt zu sein.

Gemäß einer Ausführungsform weist der polarisationsabhängige Phasenmodulator einen Kristall auf, welcher ausgestaltet ist, mit einer elektrischen Spannung beaufschlagt zu werden und dabei seinen Brechungsindex zu verändern, wodurch die Phase der ersten Polarisationskomponente des optischen Signals verändert wird. Der Brechungsindex kann aber auch verändert werden, indem eine mechanische Spannung beaufschlagt wird.

Der polarisationsabhängige Phasenmodulator kann beispielsweise ein doppelbrechendes Medium enthalten, welches bei Anlegen einer Spannung die Phase eines durch das optische Medium passierenden optischen Signals verändert.

Gemäß einer weiteren Ausführungsform ist die Modulatoreinheit ausgestaltet, die an dem Kristall anliegende elektrische Spannung über der Zeit zu variieren.

Beispielsweise enthält die Modulatoreinheit eine Energieversorgung, welche eine vorgebbare elektrische Spannung bereitstellt. Eine Steuereinheit steuert die Energieversorgung an, damit letztere eine gewünschte elektrische Spannung an den polarisationsabhängigen Phasenmodulator bereitstellt. Durch die über der Zeit variierende elektrische Spannung an dem polarisationsabhängigen Phasenmodulator wird die Phase zwischen unterschiedlich polarisierten Komponenten des optischen Signals verändert.

Gemäß einer weiteren Ausführungsform unterscheidet sich ein Betrag der ersten Phase der ersten Polarisationskomponente des Eingangssignals in der ersten Polarisationsrichtung von einem Betrag der zweiten Phase der zweiten Polarisationskomponente des retroreflektierten optischen Signals in der ersten Polarisationsrichtung.

In anderen Worten bedeutet dies, dass der polarisationsabhängige Phasenmodulator auf dem Hinweg eine andere Phase auf die horizontal polarisierte Komponente des optischen Signals moduliert als auf dem Rückweg auf die dann horizontal polarisierte Komponente des retroreflektierten Signals. Dadurch verändert sich die Polarisation des Ausgangssignals der Modulatoreinheit.

Gemäß einer weiteren Ausführungsform ist der polarisationsabhängige Phasenmodulator ausgestaltet, einen Unterschied zwischen der ersten Phase und der zweiten Phase über der Zeit zu verändern.

Indem der polarisationsabhängige Phasenmodulator den Unterschied der Phasen auf dem Hinweg und dem Rückweg über der Zeit verändert, wird die Polarisation des Ausgangssignals ebenfalls über der Zeit verändert.

Insgesamt ist die Polarisation des Ausgangssignals der Modulatoreinheit frei einstellbar zwischen zwei linearen Polarisationen (horizontal, vertikal) und zwei zirkularen Polarisationen (Z+ und Z-). Die Polarisation kann aber auch kontinuierlich auf sämtliche zwischen den diskreten Zuständen liegenden elliptischen Zustände eingestellt werden.

Gemäß einer weiteren Ausführungsform ist die Lichtquelle ausgestaltet, Licht mit einer wohldefinierten optischen Mode zu emittieren oder auszugeben. In dem vorliegenden Zusammenhang sind die Polarisations- und Kohärenzeigenschaften des optischen Signals von Bedeutung. Beispielsweise ist die Lichtquelle ein Laser.

Laser zeichnen sich dadurch aus, dass sie optische Signale mit einer wohldefinierten Polarisation emittieren können. Damit eignen sie sich insbesondere für Anwendungen wie hier beschrieben.

Gemäß einer weiteren Ausführungsform ist die Modulatoreinheit ausgestaltet, die Lichtquelle so anzusteuern, dass die Lichtquelle gepulste optische Signale emittiert.

Ein Lichtpuls passiert den polarisationsabhängigen Phasenmodulator und eine erste Polarisationskomponente wird in ihrer Phase moduliert. Sodann wird der Lichtpuls weiter zu dem Reflektor geleitet, dort wird die Polarisation des Lichtpulses geändert und der Lichtpuls zurück zu dem polarisationsabhängigen Phasenmodulator reflektiert. Auf dem Rückweg moduliert der polarisationsabhängige Phasenmodulator erneut eine Phase einer Polarisationskomponente des Lichtpulses auf.

Der Lichtpuls ist beispielsweise so ausgelegt, dass in dem polarisationsabhängigen Phasenmodulator das Licht auf dem Hinweg zu dem Reflektor und das Licht auf dem Rückweg von dem Reflektor sich nicht überlagern.

Abgesehen von der Verwendung von gepulsten Lichtsignalen kann die Lichtquelle auch ein kontinuierliches Lichtsignal aussenden, dessen Polarisation wie beschrieben verändert wird.

In einer anderen Ausführungsform kann die Modulatoreinheit so ausgestaltet sein, dass sie gepulste optische Signale moduliert und emittiert. In diesem Beispiel kann die Modulatoreinheit die gepulsten optischen Signale von einer anderen Quelle erhalten.

Gemäß einer weiteren Ausführungsform weist die Modulatoreinheit weiterhin einen Strahlteiler auf, welcher zwischen der Lichtquelle und dem polarisationsabhängigen Phasenmodulator angeordnet ist und ausgestaltet ist, mindestens einen Teil des von dem polarisationsabhängigen Phasenmodulator phasenmodulierten retroreflektierten optischen Signals in eine vorgegebene Richtung zu lenken.

Der Strahlteiler ist angeordnet, um das von dem polarisationsabhängigen Phasenmodulator ausgegebene optische Signal mindestens teilweise strukturell in eine gewünschte Richtung zu lenken, damit das von dem polarisationsabhängigen Phasenmodulator ausgegebene optische Signal nicht ausschließlich in Richtung der Lichtquelle, welche das Eingangssignal zu dem polarisationsabhängigen Phasenmodulator emittiert, abgibt. Das so erzeugte Ausgangssignal trägt in seiner Polarisation eine Information, die auf Seiten eines Empfängers ausgelesen und verarbeitet werden kann.

In einer Variante kann anstelle des Strahlteilers auch ein Zirkulator genutzt werden.

Gemäß einem weiteren Aspekt ist eine optische Signalübertragungsstrecke angegeben. Die optische Signalübertragungsstrecke weist eine Modulatoreinheit wie hierin beschrieben und einen Empfänger auf. Die Modulatoreinheit fungiert als Signalquelle bzw. Teil einer Sendeeinheit, welche ein optisches Signal ausgibt, auf dem eine Information aufgebracht ist. Die Signalquelle sendet das modulierte optische Signal in Richtung des Empfängers. Der Empfänger ist ausgestaltet, optische Signale zu empfangen. Die Modulatoreinheit ist angeordnet, das Ausgangssignal in Richtung des Empfängers zu emittieren.

Die Signalübertragungsstrecke kann für unidirektionale oder bidirektionale Signalübertragung ausgestaltet sein. Im Falle der bidirektionalen Signalübertragung gibt es mindestens zwei Kommunikationseinheiten, welche beide sowohl eine Modulatoreinheit als auch eine Empfangseinheit aufweisen.

Die hierin beschriebene Modulatoreinheit ist als Teil einer optischen Signalübertragungsstrecke implementiert. Damit ist die optische Signalübertragungsstrecke eingerichtet, Informationen mittels Polarisationsmodulation eines optischen Trägersignals zu übertragen. Die Polarisationsmodulation wird mittels der Modulatoreinheit in das optische Trägersignal eingebracht. Die Modulatoreinheit kompensiert Phasenfehler auf Grund der an der Modulation beteiligten Komponenten intrinsisch, weil das optische Signal denselben optischen Pfad zweimal durchläuft und dabei die orthogonal aufeinander stehenden Polarisationskomponenten des optischen Signals nacheinander moduliert werden.

Gemäß einer Ausführungsform ist die Modulatoreinheit in einem Satelliten angeordnet. Die Modulatoreinheit kann aber in jeglichem anderen Kommunikationssystem angeordnet sein.

Gemäß einem weiteren Aspekt ist ein Satellit mit einer Modulatoreinheit wie hierin beschrieben angegeben.

Eine Modulatoreinheit wie hierin beschrieben kann beispielsweise auf optischen Signalübertragungsstrecken verwendet werden, welche zwischen zwei mobilen Einheiten (Luft-, Wasser- oder Landfahrzeuge oder Satelliten), zwischen einer mobilen Einheit und einer Gegenstelle auf der Erdoberfläche, oder zwischen zwei stationären Einheiten zum Einsatz kommen.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung einer Modulatoreinheit.
- Fig. 2: eine schematische Darstellung des optischen Pfads durch eine Modulatoreinheit.
- Fig. 3: eine schematische Darstellung einer Modulatoreinheit.
- Fig. 4: eine schematische Darstellung einer optischen Signalübertragungsstrecke.

### Detaillierte Beschreibung von Ausführungsbeispielen

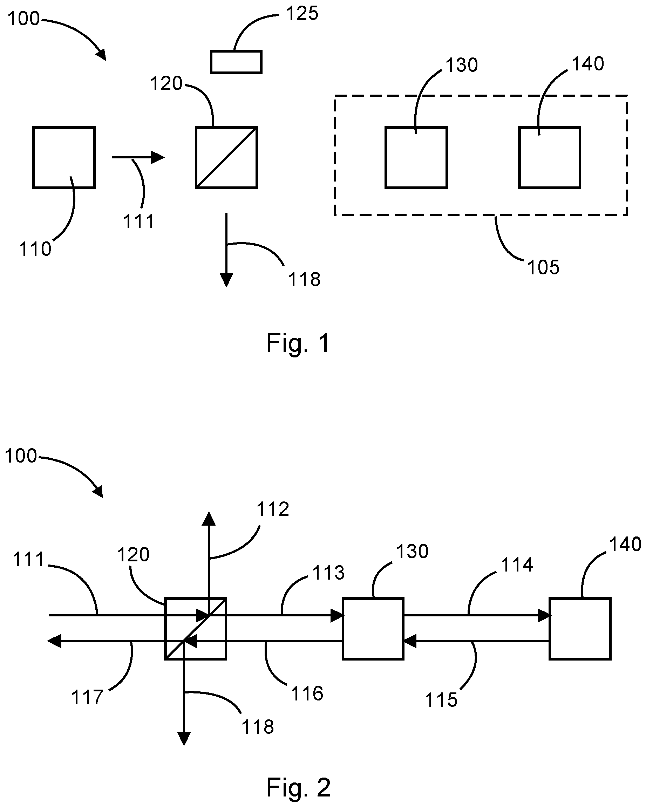

Fig. 1 zeigt den strukturellen Aufbau einer Modulatoreinheit 100. Die Modulatoreinheit 100 enthält eine Lichtquelle 110, einen Strahlteiler 120, einen Strahlabsorber 125, einen polarisationsabhängigen Phasenmodulator in Form eines elektro-optischen Modulators, EOM, 130, sowie einen Reflektor in Form eines Faraday-Spiegels 140. Der EOM 130 und der Faraday-Spiegel 140 können gemeinsam als Polarisationsmodulator 105 bezeichnet werden. Auch wenn hier beispielsweise auf einen Faraday-Spiegel 140 Bezug genommen wird, so gelten die entsprechenden Erläuterungen allgemein für einen hierin genannten Reflektor.

Die Lichtquelle 110, welche beispielsweise ein Laser ist, emittiert ein optisches Signal in Form des Eingangssignals 111. Dieses Eingangssignal wird den übrigen Komponenten zugeführt und seine Polarisation wird moduliert, um über das optische Signal Informationen zu übertragen.

Die zu übertragenden Informationen sind auf dem Ausgangssignal 118 in der Polarisation des optischen Signals moduliert.

Wie die Polarisation des optischen Signals moduliert wird, wird nun mit Bezug zu Fig. 2, welche ergänzend zu Fig. 1 zu betrachten ist, beschrieben.

In Fig. 2 wird der Weg des optischen Signals durch die Modulatoreinheit 100 beschrieben. Dabei wird auf den Zustand des optischen Signals zu verschiedenen Zeitpunkten bzw. an verschiedenen Punkten in der Modulatoreinheit 100 Bezug genommen.

Zunächst trifft das Eingangssignal 111 auf den Strahlteiler 120. Der Strahlteiler 120 ist in diesem Beispiel als nichtpolarisierender Strahlteiler ausgestaltet. Ein Teil des Eingangssignals 111 wird als erster Teil 112 des aufgeteilten Eingangssignals in Richtung des Strahlabsorbers 125 gelenkt und ein anderer Teil des Eingangssignals 111 passiert den Strahlteiler 120 als zweiter Teil 113 des aufgeteilten Eingangssignals in Richtung des EOM 130.

Der EOM 130 moduliert nun eine Polarisationskomponente des zweiten Teils 113 des optischen Signals, indem der Anteil des Signals 113 mit einer Polarisation in seiner Phase verändert wird. Am Ausgang des EOM liegt das optische Signal nun als einfachmoduliertes Signal 114 vor, also als optisches Signal, bei dem ein Polarisationsanteil in der Phase moduliert ist.

Der Faraday-Spiegel 140 retroreflektiert das einfachmodulierte Signal 114 und verändert dabei seine Polarisation um 90°, so dass das optische Signal als gespiegeltes Signal 115 erneut zu dem EOM 130 reflektiert wird.

Wenn beispielsweise auf dem Hinweg zwischen den Signalen 113 und 114 durch den EOM der horizontal polarisierte Anteil des optischen Signals moduliert wurde, dann steckt auf dem Rückweg diese Modulation nun in dem vertikal polarisierten Anteil des optischen Signals 115, weil der Faraday-Spiegel 140 die Polarisation um 90° verändert hat. Durchläuft das optische Signal 115 nun auf dem Rückweg erneut den EOM 130, so wird der nun horizontal polarisierte Anteil (entspricht dem vertikal polarisierten Anteil auf dem Hinweg, der auf dem Hinweg keine Änderung seiner Phase erfahren hat) in seiner Phase verändert.

Die optische Länge zwischen dem EOM 130 und dem Faraday-Spiegel 140 ist so bemessen, dass ein optisches Signal auf dem Rückweg nicht ein optisches Signal auf dem Hinweg innerhalb des EOMs überlagert. Allgemein ausgedrückt ist die Länge des optischen Pfads zwischen EOM und Faraday-Spiegel so bemessen, dass ein Lichtpuls auf dem Rückweg einen Lichtpuls auf dem Hinweg nicht überlagert. Insbesondere ist die Länge des optischen Pfads auf die Dauer eines Lichtpulses und die Übertragungsrate abgestimmt.

Somit werden durch den EOM auf demselben optischen Pfad beide Polarisationsanteile des optischen Signals mit einer Phase beaufschlagt. Indem die entsprechende Phase auf dem Hinweg und Rückweg vorgegeben wird, kann die Polarisation des optischen Signals variiert werden.

Das optische Signal 116 ist nun in beiden Polarisationskomponenten phasenmoduliert. Aus der Überlagerung dieser beiden Modulationen ergibt sich die Polarisation des optischen Signals 116, in welcher die zu übertragende Information enthalten ist.

Nun trifft das optische Signal 116 erneut auf den Strahlteiler 120, ein Teil 117 des optischen Signals passiert den Strahlteiler und ein weiterer Teil 118 wird in eine andere Richtung abgelenkt und entspricht dem zu übertragenden Ausgangssignal, in dessen Polarisation die zu übertragende Information enthalten ist. Alternativ ist denkbar, dass das Ausgangssignal den Strahlteiler passiert und das abgelenkte Signal verworfen wird.

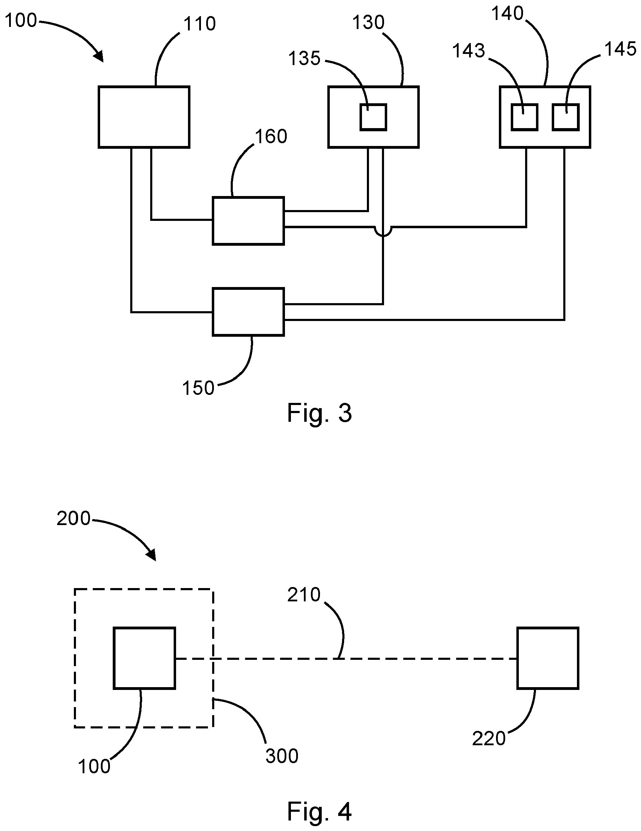

Fig. 3 stellt dar, wie die Komponenten der Modulatoreinheit 100 angesteuert werden, um die zu übertragende Information in die Polarisation des optischen Signals einzubringen.

Die Modulatoreinheit 100 enthält eine Energieversorgung 160 und eine Steuereinheit 150. Sowohl die Energieversorgung 160 als auch die Steuereinheit 150 ist mit der Lichtquelle 110, dem EOM 130 und dem Faraday-Spiegel 140 verbunden. Die Steuereinheit 150 kann aber auch direkt mit der Energieversorgung 160 verbunden sein, um eine von der Energieversorgung 160 an dem jeweiligen Anschluss ausgegebene elektrische Spannung vorzugeben.

Die Energieversorgung 160 versorgt die Lichtquelle 110 mit elektrischer Energie, damit die Lichtquelle das optische Signal, welches als Eingangssignal fungiert, erzeugt. Weiterhin versorgt die Energieversorgung 160 den EOM 130 mit elektrischer Energie, beispielsweise einer elektrischen Spannung, die an einem Kristall 135 anliegt. Diese elektrische Spannung beeinflusst den Kristall 135 dahingehend, dass die Phase eines auf bestimmte Weise polarisierten Anteils eines passierenden optischen Signals verändert wird. Beispielsweise können Variationen der elektrischen Spannung die Phase unterschiedlich stark verändern. Die Steuereinheit 150 und die Energieversorgung 160 steuern den EOM so an, dass dieser auf dem Hinweg und dem Rückweg des optischen Signals auf die gewünschte Weise auf das den EOM passierende optische Signal wirkt und die Phase der beeinflussten Polarisationskomponente entsprechend und wie gewünscht verändert. Hierbei muss die Steuereinheit und die Energieversorgung entsprechend schnell schalten und den EOM ansteuern.

Die Polarisation eines passierenden optischen Signals wird in dem Faraday-Rotator 143 verändert, im vorliegenden Beispiel um 45°. Dann trifft das optische Signal auf den Spiegel 145, wird davon reflektiert und passiert erneut den Faraday-Rotator 143. Nun wird die Polarisation des optischen Signals erneut um 45° in dieselbe Richtung verändert, so dass sich die Polarisation der in den Faraday-Spiegel einfallenden optischen Signals und die Polarisation des von dem Faraday-Spiegel ausgegebenen optischen Signals um 90° unterscheidet.

Die Steuereinheit 150 ist ausgestaltet, die Energieversorgung 160 und/oder jede einzelne der Komponenten 110, 130, 140 so anzusteuern, dass diese Komponenten mit der für ihre Funktion benötigten Energie versorgt werden. Hierzu kann die Steuereinheit 150 Steuerkommandos an die Komponenten 110, 130, 140 und/oder Steuerkommandos an die Energieversorgung 160 senden.

Fig. 4 zeigt eine optische Signalübertragungsstrecke 200. Eine Modulatoreinheit 100 fungiert als Signalquelle bzw. Sender. Die Modulatoreinheit 100 moduliert die Polarisation eines optischen Signals wie oben beschrieben und sendet das modulierte optische Signal über einen Übertragungspfad 210. Der Übertragungspfad 210 ist beispielsweise ein leitungsloser optischer Pfad.

Das modulierte optische Signal wird von einer Gegenstelle empfangen und verarbeitet. Bei der Gegenstelle handelt es sich um den Empfänger 220. Die Modulatoreinheit 100 kann an Bord eines Satelliten angeordnet sein. Der Empfänger 220 kann auf der Erdoberfläche oder an Bord eines anderen Satelliten angeordnet sein.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 100: Modulatoreinheit
- 105: Polarisationsmodulator
- 110: Lichtquelle
- 111: Eingangssignal
- 112: erster Teil des aufgeteilten Eingangssignals
- 113: zweiter Teil des aufgeteilten Eingangssignals
- 114: einfachmoduliertes Signal
- 115: gespiegeltes Signal
- 116: zweifachmoduliertes Signal
- 117: abgezweigtes Signal
- 118: Ausgangssignal
- 120: Strahlteiler
- 125: Strahlabsorber
- 130: polarisationsabhängiger Phasenmodulator, elektro-optischer Modulator
- 135: Kristall
- 140: Reflektor, Faraday-Spiegel
- 143: Faraday-Rotator
- 145: Spiegel
- 150: Steuereinheit
- 160: Energieversorgung
- 200: optische Signalübertragungsstrecke
- 210: Übertragungspfad, optisches Signal
- 220: Empfänger
- 300: Satellit

## Patentansprüche

1. Modulatoreinheit (100) zum Modulieren der Polarisation eines optischen Signals, aufweisend:
eine Lichtquelle (110);
einen polarisationsabhängigen Phasenmodulator (130);
einen Reflektor (140);
wobei die Lichtquelle (110) ausgestaltet ist, ein optisches Signal auszugeben und als Eingangssignal (111) in Richtung des polarisationsabhängigen Phasenmodulators (130) zu emittieren, wobei das optische Signal eine erste Polarisationskomponente mit einer ersten Polarisationsrichtung und eine zweite Polarisationskomponente mit einer zweiten Polarisationsrichtung enthält;
wobei der polarisationsabhängige Phasenmodulator (130) ausgestaltet ist, eine erste Phase der ersten Polarisationskomponente des Eingangssignals (111) in der ersten Polarisationsrichtung zu modulieren und das so modulierte Eingangssignal an den Reflektor (140) weiterzuleiten;
**dadurch gekennzeichnet, dass**
der Reflektor (140) ausgestaltet ist, das erhaltene optische Signal in Richtung des polarisationsabhängigen Phasenmodulators (130) zu retroreflektieren und dabei seine Polarisation zu verändern, so dass die erste Polarisationskomponente mit der ersten Polarisationsrichtung die zweite Polarisationsrichtung erhält und die zweite Polarisationskomponente mit der zweiten Polarisationsrichtung die erste Polarisationsrichtung erhält;
wobei der polarisationsabhängige Phasenmodulator (130) ausgestaltet ist, eine zweite Phase der zweiten Polarisationskomponente des retroreflektierten optischen Signals in der ersten Polarisationsrichtung zu modulieren;
wobei die Modulatoreinheit (100) ausgestaltet ist, das so modulierte optische Signal als polarisationsmoduliertes Ausgangssignal (118) auszugeben.

2. Modulatoreinheit (100) nach Anspruch 1,
wobei der polarisationsabhängige Phasenmodulator (130) einen Kristall (135) aufweist, welcher ausgestaltet ist, mit einer elektrischen Spannung beaufschlagt zu werden und dabei seinen Brechungsindex zu verändern, wodurch die Phase der ersten Polarisationskomponente des optischen Signals verändert wird.

3. Modulatoreinheit (100) nach Anspruch 2,
wobei die Modulatoreinheit (100) ausgestaltet ist, die an dem Kristall (135) anliegende elektrische Spannung über der Zeit zu variieren.

4. Modulatoreinheit (100) nach einer der voranstehenden Ansprüche,
wobei ein Betrag der ersten Phase der ersten Polarisationskomponente des Eingangssignals (111) in der ersten Polarisationsrichtung sich von einem Betrag der zweiten Phase der zweiten Polarisationskomponente des retroreflektierten optischen Signals in der ersten Polarisationsrichtung unterscheidet.

5. Modulatoreinheit (100) nach Anspruch 4,
wobei der polarisationsabhängige Phasenmodulator (130) ausgestaltet ist, einen Unterschied zwischen der ersten Phase und der zweiten Phase über der Zeit zu verändern.

6. Modulatoreinheit (100) nach einem der voranstehenden Ansprüche,
wobei die Lichtquelle (110) ausgestaltet ist, Licht mit einer definierten optischen Mode auszugeben.

7. Modulatoreinheit (100) nach einem der voranstehenden Ansprüche,
wobei die Modulatoreinheit (100) ausgestaltet ist, die Lichtquelle (110) so anzusteuern, dass die Lichtquelle (110) gepulste optische Signale emittiert.

8. Modulatoreinheit (100) nach einem der voranstehenden Ansprüche,
weiterhin aufweisend einen Strahlteiler (120), welcher zwischen der Lichtquelle (110) und dem polarisationsabhängigen Phasenmodulator (130) angeordnet ist und ausgestaltet ist, mindestens einen Teil des von dem polarisationsabhängigen Phasenmodulator (130) phasenmodulierten retroreflektierten optischen Signals in eine vorgegebene Richtung zu lenken.

9. Optische Signalübertragungsstrecke (200), aufweisend
eine Modulatoreinheit (100) nach einem der Ansprüche 1 bis 8;
einen Empfänger (220), welcher ausgestaltet ist, optische Signale zu empfangen;
wobei die Modulatoreinheit (100) angeordnet ist, das Ausgangssignal (118) in Richtung des Empfängers (220) zu emittieren.

10. Satellit (300) mit einer Modulatoreinheit (100) nach einem der Ansprüche 1 bis 8.

## Claims

1. Modulator unit (100) for modulating the polarization of an optical signal, including:
a light source (110);
a polarization-dependent phase modulator (130);
a reflector (140);
wherein the light source (110) is designed to output an optical signal and emit it as an input signal (111) in the direction of the polarization-dependent phase modulator (130), wherein the optical signal contains a first polarization component having a first polarization direction and a second polarization component having a second polarization direction;
wherein the polarization-dependent phase modulator (130) is designed to modulate a first phase of the first polarization component of the input signal (111) in the first polarization direction and to pass on the input signal thus modulated to the reflector (140);
**characterized in that** the reflector (140) is designed to retroreflect the received optical signal in the direction of the polarization-dependent phase modulator (130) and at the same time to change its polarization, so that the first polarization component having the first polarization direction receives the second polarization direction and the second polarization component having the second polarization direction receives the first polarization direction;
wherein the polarization-dependent phase modulator (130) is designed to modulate a second phase of the second polarization component of the retroreflected optical signal in the first polarization direction;
wherein the modulator unit (100) is designed to output the optical signal thus modulated as a polarization-modulated output signal (118).

2. Modulator unit (100) according to Claim 1,
wherein the polarization-dependent phase modulator (130) includes a crystal (135), which is designed to be subjected to an electrical voltage and in this case to change its index of refraction, by which the phase of the first polarization component of the optical signal is changed.

3. Modulator unit (100) according to Claim 2,
wherein the modulator unit (100) is designed to vary the electrical voltage applied to the crystal (135) over time.

4. Modulator unit (100) according to any one of the preceding claims,
wherein an absolute value of the first phase of the first polarization component of the input signal (111) in the first polarization direction differs from an absolute value of the second phase of the second polarization component of the retroreflected optical signal in the first polarization direction.

5. Modulator unit (100) according to Claim 4,
wherein the polarization-dependent phase modulator (130) is designed to change a difference between the first phase and the second phase over time.

6. Modulator unit (100) according to any one of the preceding claims,
wherein the light source (110) is designed to output light with a defined optical mode.

7. Modulator unit (100) according to any one of the preceding claims,
wherein the modulator unit (100) is designed to activate the light source (110) so that the light source (110) emits pulsed optical signals.

8. Modulator unit (100) according to any one of the preceding claims,
furthermore including a beam splitter (120), which is arranged between the light source (110) and the polarization-dependent phase modulator (130) and is designed to guide at least a part of the retroreflected optical signal phase-modulated by the polarization-dependent phase modulator (130) in a specified direction.

9. Optical signal transmission link (200), including
a modulator unit (100) according to any one of Claims 1 to 8;
a receiver (220), which is designed to receive optical signals;
wherein the modulator unit (100) is arranged to emit the output signal (118) in the direction of the receiver (220) .

10. Satellite (300) comprising a modulator unit (100) according to any one of Claims 1 to 8.

## Revendications

1. Unité de modulation (100) destinée à moduler la polarisation d'un signal optique, ladite unité comportant :
une source de lumière (110) ;
un modulateur de phase dépendant de la polarisation (130) ;
un réflecteur (140) ;
la source de lumière (110) étant conçue pour délivrer un signal optique et l'émettre comme signal d'entrée (111) en direction du modulateur de phase dépendant de la polarisation (130), le signal optique comprenant une première composante de polarisation ayant une première direction de polarisation et une deuxième composante de polarisation ayant une deuxième direction de polarisation ;
le modulateur de phase dépendant de la polarisation (130) étant conçu pour moduler une première phase de la première composante de polarisation du signal d'entrée (111) dans la première direction de polarisation et transmettre le signal d'entrée ainsi modulé au réflecteur (140) ;
**caractérisée en ce que**
le réflecteur (140) est conçu pour rétro-réfléchir le signal optique obtenu en direction du modulateur de phase dépendant de la polarisation (130) et modifier ainsi sa polarisation, de sorte que la première composante de polarisation ayant la première direction de polarisation prenne la deuxième direction de polarisation et que la deuxième composante de polarisation ayant la deuxième direction de polarisation prenne la première direction de polarisation ;
le modulateur de phase dépendant de la polarisation (130) étant conçu pour moduler une deuxième phase de la deuxième composante de polarisation du signal optique rétro-réfléchi dans la première direction de polarisation ;
l'unité de modulation (100) étant conçue pour délivrer le signal optique ainsi modulé comme signal de sortie à polarisation modulée (118).

2. Unité de modulation (100) selon la revendication 1,
le modulateur de phase dépendant de la polarisation (130) comportant un cristal (135) qui est conçu pour être soumis à une tension électrique et modifier ainsi son indice de réfraction, ce qui permet de modifier la phase de la première composante de polarisation du signal optique.

3. Unité de modulation (100) selon la revendication 2,
l'unité de modulation (100) étant conçue pour faire varier dans le temps la tension électrique appliquée au cristal (135).

4. Unité de modulation (100) selon l'une des revendications précédentes,
une valeur de la première phase de la première composante de polarisation du signal d'entrée (111) dans la première direction de polarisation différant de la valeur de la deuxième phase de la deuxième composante de polarisation du signal optique rétro-réfléchi dans la première direction de polarisation.

5. Unité de modulation (100) selon la revendication 4,
le modulateur de phase dépendant de la polarisation (130) étant conçu pour modifier dans le temps une différence entre la première phase et la deuxième phase.

6. Unité de modulation (100) selon l'une des revendications précédentes,
la source de lumière (110) étant conçue pour délivrer de la lumière avec un mode optique défini.

7. Unité de modulation (100) selon l'une des revendications précédentes,
l'unité de modulation (100) étant conçue pour commander la source de lumière (110) de telle sorte que la source de lumière (110) émette des signaux optiques pulsés.

8. Unité de modulation (100) selon l'une des revendications précédentes, ladite unité comprenant en outre un séparateur de faisceau (120), qui est disposé entre la source de lumière (110) et le modulateur de phase dépendant de la polarisation (130) et qui est conçu pour diriger au moins une partie du signal optique rétro-réfléchi, modulé en phase par le modulateur de phase dépendant de la polarisation (130), dans une direction spécifiée.

9. Voie de transmission de signal optique (200), comportant
une unité de modulation (100) selon l'une des revendications 1 à 8 ;
un récepteur (220) conçu pour recevoir des signaux optiques ;
l'unité de modulation (100) étant conçue pour émettre le signal de sortie (118) en direction du récepteur (220) .

10. Satellite (300) comprenant une unité de modulation (100) selon l'une des revendications 1 à 8.
